# EUROPEAN PATENT APPLICATION

(11) **EP 3 029 009 A1**
(43) Date of publication of application: **08.06.2016**
(21) Application number: 14847888.6
(22) Date of filing: 04.07.2014
(51) Int. Cl.: C04B 35/653, C01B 31/30

(54) **METHOD FOR PRODUCING INGOT AND POWDER OF ZIRCONIUM CARBIDE**

(30) Priority: 24.09.2013 JP 2013196717
(71) Applicant: Daiichi Kigenso Kagaku Kogyo Co., Ltd., Osaka-shi, Osaka 559-0025 (JP)
(72) Inventor: NABETA, Takuji, Osaka-shi Osaka 559-0025 (JP)
(74) Representative: Lumsden, Stuart Edward Henry
(86) International application number: PCT/JP2014/067879
(87) International publication number: WO 2015/045547

(57) **Abstract**

The present invention provides a method for producing an ingot of zirconium carbide at a low cost in an efficient manner.

The present invention, specifically, provides a method for producing an ingot of zirconium carbide, characterized in that the ingot produced has a size of 50 mm or more, a density of 5.7 g/cm³ or more, and a Vickers hardness of 1,500 or more, and that the method includes the steps of:
(1) Step 1 of mixing zirconium oxide with carbon to obtain a mixture thereof, wherein the carbon is present in an amount of 15 to 20% by mass based on the zirconium oxide in the mixture;
(2) Step 2 of forming the mixture into granules;
(3) Step 3 of melting the granules using argon plasma; and
(4) Step 4 of slowly cooling the melt to obtain the ingot of zirconium carbide.

## Description

### Technical Field

The present invention relates to a method for producing an ingot of zirconium carbide, and a powder thereof.

### Background Art

Zirconium carbide (ZrC) is a chemically stable material with a high melting point, high hardness, high electrical conductivity, and high thermal shock resistance. Because of these characteristics, zirconium carbide has applications in high-temperature structural materials, cemented carbide tool materials, field-emission cathode materials, and others. Because zirconium carbide efficiently converts the near infrared rays of sunlight into heat energy while reflecting the far infrared rays, zirconium carbide is a material of great potential, as seen in the use for high-heat-retaining cold weather clothing.

There are known methods for producing zirconium carbide: (i) a combustion synthesis reaction between zirconium metal and carbon, and (ii) endothermic carbothermal reduction of zirconium oxide. However, these two production methods have room for improvement as described below.

In the combustion synthesis reaction (i), zirconium metal, a starting material, is obtained by chlorinating zircon (ZrSiO₄), which is a starting material and a natural mineral, to obtain zirconium tetrachloride, and reducing the zirconium tetrachloride with a reducing metal, such as magnesium metal. This reaction is, however, disadvantageous in high production cost due to the need for an excessive amount of magnesium metal as well as the step of separating the magnesium metal after the reaction.

Endothermic carbothermal reduction (ii) is a method to obtain zirconium carbide by reducing the oxygen of zirconium oxide with carbon (e.g., Patent Literature 1, and Non-patent Literature 1 to 3).

Patent Literature 1 discloses in prior art section (3) a method in which zirconium oxide is mixed with carbon, and placed in a graphite board, followed by heating to about 2,400°C in a Tammann furnace or a high-frequency induction furnace. Patent Literature 1 also discloses in prior art section (4) a method in which carbon in an amount excessively larger than the stoichiometric amount is added to a zirconium-containing mineral (e.g., zircon), and the mixture is heated to 2,000°C or more in a reducing atmosphere in an arc melting furnace to melt the mixture. Although a melting treatment at a temperature of 2,000°C or more is disclosed in prior art sections (3) and (4), it is difficult to maintain the temperature at 3,000°C or more inside the entire Tammann furnace, high-frequency induction furnace, or typical arc melting furnace. Thus, zirconium carbide having a melting point of about 3,500°C is not fully melted in the furnace, and cannot be obtained at a high yield, although partly sintered zirconium carbide is obtained.

Patent Literature 2 and 3 on zirconium carbide also exist. Patent Literature 2, however, merely discloses a step of obtaining single-crystal zirconium carbide from a zirconium carbide powder (a commercially available product) as a starting material, and does not mention the method for producing zirconium carbide used as a starting material. Patent Literature 3 discloses a composite refractory of stabilized zirconium oxide and zirconium carbide. However, Patent Literature 3 merely teaches that stabilized zirconium oxide (starting material) is reduced by carbon, and that a composite partly containing zirconium carbide is obtained, without mentioning the method for producing zirconium carbide as an elemental substance.

As stated above, although zirconium carbide powders are available in the market, there has been a demand for methods for producing a zirconium carbide powder at a lower cost in a highly efficient manner. Non-patent Literature 1 and 2 discloses methods for synthesizing a zirconium carbide powder from zirconium oxide in a methane gas atmosphere using magnesium as a reducing agent. Non-patent Literature 3 discloses a method for synthesizing a zirconium carbide powder from a starting material, zirconium tetrachloride, using carbon and sodium hydrogen carbonate as a reducing agent. However, all of the Literature 1 to 3 requires the removal of impurities (compounds containing the reducing agent) after the synthesis of a zirconium carbide powder.

Moreover, to obtain zirconium carbide structure, such as ingots and sintered objects, a zirconium carbide powder, as a starting material, conventionally needs to be press-molded and sintered in a reducing atmosphere; thus, structures having characteristics such as high density and high hardness cannot be easily obtained.

Although there are market needs for zirconium carbide because of its excellent characteristics, market prices are high, and improvements in production methods continue to be made at present. If an ingot of zirconium carbide is obtained at a low cost in an efficient manner, a zirconium carbide powder can be obtained in a simple manner by pulverizing the ingot without having to rely on a sintering treatment. Thus, there has been a demand for the development of methods for efficiently producing an ingot of zirconium carbide at a low cost.

### Citation List

### Patent Literature

PTL 1: JPH02-18310A
PTL 2: JPS56-134599A
PTL 3: JPH09-132455A

### Non-patent Literature

NPL 1: Kenji YAMANE et al., Funtai Kogaku Kaishi, Vol. 23, No. 9 (1986) 665-670
NPL 2: Tsutomu IKEDA et al., Yogyo Kyokaishi, Vol. 93, No. 1 (1985) 7-12
NPL 3: LEE Dong-won et al., Mater. Trans. Vol. 51, No. 12 (2010) 2266-2268

### Summary of Invention

### Technical Problem

An object of the present invention is to provide methods for efficiently producing an ingot of zirconium carbide and a powder thereof at a low cost. Another object of the present invention is to provide an ingot of zirconium carbide having a high density and a high hardness and a powder thereof obtained by the methods.

### Solution to Problem

The present inventor conducted extensive research to achieve the objects, and found that a specific production method using, as starting materials, easily synthesizable zirconium oxide and readily available inexpensive carbon can achieve the objects. The inventor then completed the invention.

Specifically, the present invention relates to the following methods for producing an ingot of zirconium carbide and a powder thereof.

Item 1. A method for producing an ingot of zirconium carbide, the method being characterized in that the ingot produced has a size of 50 mm or more, a density of 5.7 g/cm³ or more, and a Vickers hardness of 1,500 or more, and that the method comprises the steps of:
(1) Step 1 of mixing zirconium oxide with carbon to obtain a mixture thereof, wherein the carbon is present in an amount of 15 to 20% by mass based on the zirconium oxide in the mixture;
(2) Step 2 of forming the mixture into granules;
(3) Step 3 of melting the granules using argon plasma; and
(4) Step 4 of slowly cooling the melt to obtain the ingot of zirconium carbide.

Item 2. The method according to Item 1, wherein the ingot of zirconium carbide has a size of 80 mm or more, a density of 6.0 g/cm³ or more, and a Vickers hardness of 2,000 or more.

Item 3. A method for producing a zirconium carbide powder, the method comprising pulverizing the ingot of zirconium carbide obtained by the method according to Item 1 or 2.

Item 4. An ingot of zirconium carbide, the ingot having a size of 80 mm or more, a density of 6.0 g/cm³ or more, and a Vickers hardness of 2,000 or more.

### Advantageous Effects of Invention

The method for producing an ingot of zirconium carbide according to the present invention is inexpensive because of the use of zirconium oxide, which can be easily synthesized, and the use of carbon, which is available at a low cost, as starting materials, and the method also enables the production of an ingot having a high density and a high hardness at a high yield. Moreover, pulverizing the ingot simply provides a zirconium carbide powder without having to relying on a sintering treatment.

### Brief Description of Drawings

Fig. 1 is a planar view showing an electric melting furnace capable of argon plasma melting.
Fig. 2 is a photograph showing the granules obtained by the granulation treatment in Example 1.
Fig. 3 is a photograph showing the ingot of zirconium carbide obtained in Example 1.
Fig. 4 shows an XRD spectrum of the zirconium carbide obtained in Example 1.
Fig. 5 shows XRD spectra of the ingot-like product obtained in Comparative Example 1. Two sites of the ingot-like product were sampled, and the upper and lower XRD spectra, respectively, correspond to the two sites.

### Description of Embodiments

The following describes the methods for producing an ingot and a powder of the ingot according to the present invention in detail.

### Method for Producing Ingot of Zirconium Carbide

The method for producing an ingot of zirconium carbide according to the present invention is characterized in that the ingot produced has a size of 50 mm or more, a density of 5.7 g/cm³ or more, and a Vickers hardness of 1,500 or more, and that the method comprises the steps of:
(1) Step 1 of mixing zirconium oxide with carbon to obtain a mixture thereof, wherein the carbon is present in an amount of 15 to 20% by mass based on the zirconium oxide in the mixture;
(2) Step 2 of forming the mixture into granules;
(3) Step 3 of melting the granules using argon plasma; and
(4) Step 4 of slowly cooling the melt to obtain the ingot of zirconium carbide.

The method for producing an ingot of zirconium carbide, which has the characteristics described above, according to the present invention is inexpensive because of the use of zirconium oxide, which can be easily synthesized, and the use of carbon, which is available at a low cost, as starting materials, and the method enables the production of an ingot having a high density and a high hardness at a high yield. Moreover, pulverizing the ingot simply provides a zirconium carbide powder without having to rely on a sintering treatment.

The following describes each step.

### Step 1

In Step 1, zirconium oxide is mixed with carbon to obtain a mixture. In the present invention, the amount of carbon is set to 15 to 20% by mass based on the zirconium oxide in the mixture.

The starting material, zirconium oxide, may be any of those commercially available. The zirconium oxide is not particularly limited in physical property values, such as the mean particle size and specific surface area. However, the mean particle size is preferably 1 µm or more, and more preferably 3 µm or more. Even if the mean particle size is less than 1 µm, zirconium carbide can be produced. However, when granules are melted using argon plasma in the below-described Step 3, the powder may be easily dispersed by carbon dioxide generated by the ZrO₂+2C→ZrC+CO₂↑ reaction, increasing the likelihood of a lower yield of zirconium carbide. The mean particle size as used herein is a value as measured by a laser diffraction particle size distribution analyzer SALD-2200 (Shimadzu Corporation).

Zirconium oxide typically contains hafnium as an impurity, and the hafnium content is 2.2% by mass or less. When zirconium oxide contains impurities other than hafnium, the content of the impurities other than hafnium is preferably less than 1% by mass, and more preferably 0.5% by mass or less. When zirconium oxide contains 1% by mass or more of impurities other than hafnium, the impurities are likely to affect the characteristics of zirconium carbide.

The other starting material, carbon, for use may be a carbon powder. When block carbon is used, the granulation treatment in the below-described Step 2 may be difficult.

The mean particle size of the carbon powder is, although not limited to, preferably 2 mm or less, and more preferably 0.5 mm or less. However, when fine particles with a mean particle size of 10 µm or less are used, the particles may disperse in the air during the granulation treatment in the below-described Step 2, thus requiring the use of a device such as a protector. The particles may further be easily dispersed by carbon dioxide generated in the synthesis of zirconium carbide in the below-described Step 3.

The content of impurities in carbon is preferably less than 1% by mass, and more preferably 0.5% by mass or less. When carbon contains 1% by mass or more of impurities, the impurities are likely to affect the characteristics of the zirconium carbide.

Regarding the amounts of starting materials, zirconium oxide and carbon, the mass ratio (%) of carbon to zirconium oxide in the mixture ({mass of carbon/mass of zirconium oxide}×100) is set to 15 to 20% by mass, taking into account the amount of carbon to be burned.

In particular, in terms of the range of mass ratio, 16 to 19% by mass is preferable, and 17 to 18% by mass is more preferable. A mass ratio of less than 15% by mass may result in a deficiency of carbon due to combustion and dispersal of carbon, which leads to the conversion of zirconium oxide (ZrO₂) into zirconium nitride (ZrN) and/or zirconium monoxide (ZrO) instead of zirconium carbide (ZrC). A mass ratio of more than 20% by mass, on the other hand, may result in residual carbon in the obtained ingot of zirconium carbide due to an excessive amount of carbon, and may reduce the density and Vickers hardness.

The method for mixing the starting materials, zirconium oxide and carbon, is not particularly limited, and any means can be used as long as the materials are homogeneously mixed. Examples include known stirrers, such as V-mixers, rocking mixers, and ribbon mixers. Of these, V-mixers are particularly preferable because of their simple structure, fewer dead zones, and homogeneous mixture capability.

### Step 2

In Step 2, the mixture prepared in Step 1 is granulated to form granules.

The purpose of subjecting the mixture to the granulation treatment is to decrease the dispersal of the powder of the starting materials caused by the arc impact that is generated when argon plasma is applied in the below-described Step 3 and by carbon dioxide generated in Step 3. When the powder of the starting materials disperses, shifts in the composition of the starting material mixture occur, and the reaction product may contain zirconium nitride; this may decrease the yield of zirconium carbide.

To obtain granules, a typical granulation method, such as dry granulation or wet granulation, can be used. Examples of dry granulation methods include a method using a tumbling granulator; a method using an extruder; a mechanical alloying method using compression force and shear force; and a hybridization method involving collision of powders at a high speed in an air stream. Examples of wet granulation methods include a spray drying method and an electroless plating method. These granulation methods may be used singly or in a combination of two or more.

When forming granules, one or more binder may optionally be added. From the standpoint of impurities, the binder is preferably, although not particularly limited to, an organic binder rather than an inorganic binder.

The size of the granules is not limited, but is preferably about 3 to 30 mm, and more preferably about 10 to 20 mm. Instead of a spherical shape, the granules may also have a cylindrical shape.

When an organic binder is used, the granules are preferably calcined at about 300 to 500°C. When the granules are subjected to the treatment in the below-described Step 3 without being calcined, the starting material powder may be dispersed by the impact of the instantaneous combustion of the organic binder caused by the application of argon plasma, which may result in shifts in the composition of the starting material mixture and a decrease in the yield of zirconium carbide.

### Step 3

In Step 3, the granules obtained in Step 2 are melted by argon plasma.

For melting the granules, a known electric arc furnace can be used. However, it is difficult to maintain the temperature inside a typical electric arc furnace at the melting point of zirconium carbide or higher, simply by using the furnace as it is; thus, the ingot of zirconium carbide cannot be synthesized at a high yield. Therefore, the melting step using argon plasma is essential in the present invention.

Argon plasma can be obtained by filling an electric arc furnace with argon gas and generating plasma. The electric power consumption rate to be applied is preferably about 3 to 30 kwh/kg, and more preferably about 5 to 20 kwh/kg.

Argon plasma is a highly stable plasma as it can be used in inductively coupled plasma emission spectrometry, and the temperature of argon plasma is extremely high, reportedly reaching 8,000°C or more. Thus, argon plasma can maintain the temperature of the entire furnace at the melting point of zirconium carbide or higher, thus enabling the production of the ingot of zirconium carbide stably and efficiently. The atmosphere pressure inside the furnace is not limited, and may be an ordinary pressure, increased pressure, or reduced pressure. However, the melting step may be typically carried out under ordinary pressure. Optionally, coke may be added to the granules as a conductive material to prompt initial energization.

Argon gas or argon gas-containing inert gas is allowed to flow into the electric melting furnace simultaneously with the energization of the furnace to thereby fill the furnace with the gas. Examples of argon gas-containing inert gas include mixed gas obtained by mixing argon gas with at least one member selected from the group consisting of helium, neon, and carbon dioxide. The amount of each of helium, neon, and carbon dioxide to be mixed is not limited as long as argon plasma is generated. However, given that helium and neon are expensive, and the melting step is preferably conducted using stable argon plasma, the use of argon gas (alone) is typically preferable. It is difficult to particularly limit the flow rate of argon gas or argon gas-containing inert gas because the flow rate depends on the size of the furnace or the circulation of the furnace atmosphere. However, a flow rate that enables stable generation of argon plasma is necessary.

### Step 4

In Step 4, the melt obtained in Step 3 is slowly cooled to obtain an ingot of zirconium carbide.

When slowly cooled, the melt is preferably cooled slowly over 20 hours or more with the electric arc furnace being covered by a carbon lid or the like. The slow cooling rate is not limited, but typically about 100 to 500°C/hour, and preferably about 100 to 300°C/hour. Accordingly, an ingot of zirconium carbide is formed. The slow cooling time period is more preferably 30 to 50 hours. When the temperature of the melt rapidly drops, it is preferable to avoid such rapid cooling by heating the melt in the slow cooling step. Slowly cooling the melt, while avoiding a rapid temperature drop, allows the elements in the melt to homogenously form a solid solution to thereby form an ingot of zirconium carbide at a high yield. After an ingot is formed, the ingot may be removed from the electric arc furnace and cooled to 100°C or less, preferably 50°C or less, in the atmosphere.

The ingot of zirconium carbide obtained by conducting the above-described steps has a size of 50 mm or more, a density of 5.7 g/cm³ or more, and a Vickers hardness of 1,500 or more. As used herein, the size of the ingot refers to the longest side of the width, length, and height (thickness) of the ingot. In this specification, only the products that satisfy the above-described physical property values are called "ingot," and those that fail to satisfy at least one of the physical property values are called "ingot-like product."

To obtain a zirconium carbide structure (sintered object or ingot), a zirconium carbide powder conventionally needs to be press-molded and then sintered in a reducing gas atmosphere. The sintering treatment is costly, and the thus obtained structure is also limited in size. In contrast, the method according to the present invention enables the production of an ingot having a size of 50 mm or more (preferably, 80 mm or more) without conducting a sintering treatment, thereby having a great advantage.

Although the zirconium carbide in the prior art has a stoichiometric density of 6.7 g/cm³, the ingot obtained by the method according to the present invention has a density of 5.7 g/cm³ or more; in a preferred embodiment of the present invention, the density is 6.0 g/cm³ or more. Zirconium carbide having a high density is construed as being high-purity zirconium carbide with fewer carbon components. The ingot obtained by the method according to the present invention is also considered to exhibit high hardness due to fewer voids and fewer fracture origins.

The ingot obtained by the method according to the present invention has a Vickers hardness of 1,500 or more; in a preferred embodiment of the present invention, the Vickers hardness is 2,000 or more. Because of the high Vickers hardness, the ingot is considered to have applications as an ultrahard material. The zirconium carbide obtained by the method according to the present invention has a melting point higher than WC (tungsten carbide), which is typically used as a cemented carbide in abrasion-resistant products, and the like, thereby having a wide range of applications.

The ingot obtained by the method according to the present invention, although containing a slight amount of carbon components, exhibits a variety of characteristics. The carbon content in zirconium carbide is stoichiometrically 11.6% by mass, and the carbon content in the ingot of the present invention is about 13 to 15% by mass.

### Method for Producing Zirconium Carbide Powder

The method for producing a zirconium carbide powder according to the present invention is characterized in that the ingot of zirconium carbide obtained by the method for producing an ingot described above is pulverized into a powder. As described above, the ingot of the present invention has a higher density and a higher hardness than conventional products, and thus the zirconium carbide powder of the present invention obtained by pulverizing the ingot also has a high density and a high hardness.

For pulverization of the ingot, known pulverizers, such as jaw crushers and roll crushers, can be used. The particle size of the zirconium carbide powder can be suitably determined, depending on the intended use. For example, the particle size can be 3 mm or less, and even 1 mm or less. The particle size can be made uniform by classification after the pulverization.

### Examples

The following Examples and Comparative Examples describe the present invention in detail. However, the present invention is not limited to these Examples.

The Vickers hardness in the Examples and Comparative Examples is a value as measured in accordance with JIS2244 (2009) using a Vickers hardness tester (HV-115, Mitutoyo Corporation). The Vickers hardness was measured at 9.8 N for 10 seconds.

### Example 1

A zirconium oxide powder having a purity of 99.5% by mass and a mean particle size of 3 µm (Daiichi Kigenso Kagaku Kogyo Co., Ltd.) was used. A fine powder SGP (SEC Carbon, Limited) was used as a carbon powder.

First, 83.8 kg of the zirconium oxide powder and 14.6 kg of the carbon powder were weighed, and mixed with a V-mixer for 30 minutes (C/ZrO₂ mixture ratio: 17.4%).

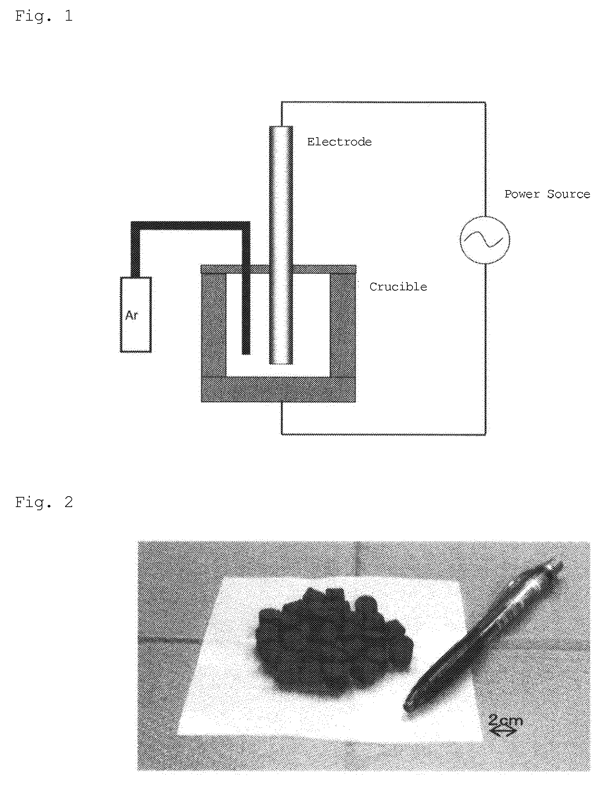

Subsequently, 5 kg of a cellulose-based binder METOLOSE (Shin-Etsu Chemical Co., Ltd.) and 35 kg of water were slowly poured thereinto, and the mixture was granulated with an extruder. Fig. 2 shows a photograph of the granules. The granules had a diameter of about 20 mm and a height of about 20 mm with a cylindrical shape. The granules were then calcined at 500°C for 15 hours, and then subjected to the next electrical melting step.

An electric melting furnace was paved with the granules and energized, while being supplied with a flow of argon gas for generating argon plasma at 0.03 MPa. Electric power was applied at 110 kWh for 6 hours to melt the granules at a temperature equal to or higher than the melting point of zirconium carbide. After completion of the melting, the argon gas supply was terminated, and the furnace was covered by a carbon lid. The melt was then allowed to stand undisturbed for 30 hours and slowly cooled to thereby obtain an ingot of zirconium carbide.

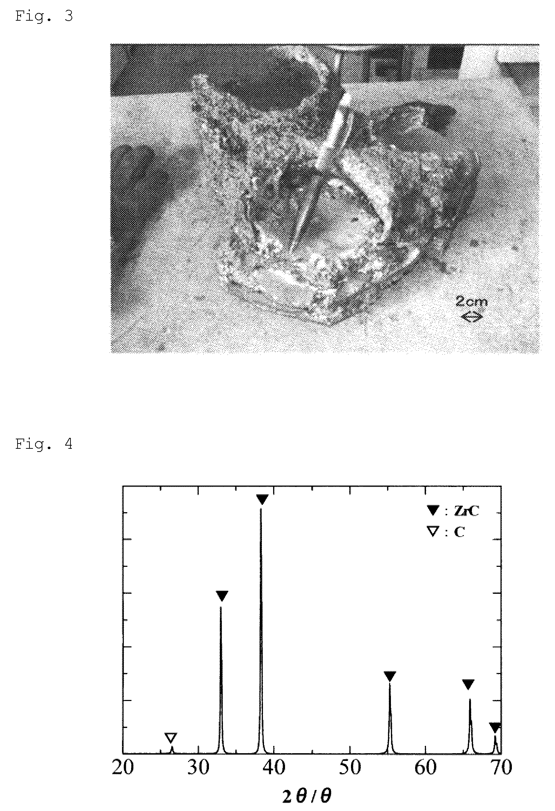

The yield was 80%. Table 1 shows the results of a characteristics evaluation. Fig. 4 shows an XRD spectrum of the obtained ingot.

**Table 1**

| | C (Carbon) | Size of Ingot | Density | Vickers Hardness | Yield * |
|---|---|---|---|---|---|
| | % | mm | g/cm³ | HV | % |
| Example 1 | 13.2 | >200 | 6.2 | 2079 | 80 |
| Example 2 | 13.6 | >100 | 6.0 | 2040 | 75 |
| Comparative Example 1 | 9.8 | - | 5.7 | 1562 | - |
| Comparative Example 2 | 21.9 | >100 | 5.4 | 1347 | 46 |

| | | | | | |
|---|---|---|---|---|---|
| *Yield = Weight of Ingot/Weight of Zr+C Added | | | | | |

### Example 2

The procedure of Example 1 was repeated except that 20 kg of the granules was used and electric power was applied at 110 kWh for 2 hours, thereby giving an ingot of zirconium carbide.

The yield was 75%. Table 1 shows the results of the evaluation of the obtained ingot.

### Comparative Example 1

84 kg of the zirconium oxide powder and 12 kg of the carbon powder were subjected to a granulation treatment in the same manner as in Example 1, thereby giving granules (C/ZrO₂ mixture ratio: 14.3%).

The granules were melted in the electrical melting step under the same conditions as those of Example 1 and then cooled.

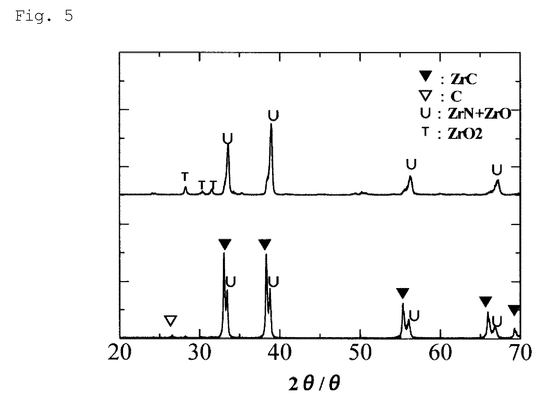

Fig. 5 shows XRD spectra of the obtained ingot-like product. Two sites of the ingot-like product were sampled. The upper and lower XRD spectra, respectively, correspond to the two sites. Zirconium carbide was not formed at either of the two sampled sites in the ingot-like product, and instead, a mixture of zirconium monoxide and zirconium nitride was present.

The yield was almost zero. Table 1 shows the results of the evaluation of the obtained ingot-like product.

### Comparative Example 2

84 kg of the zirconium oxide powder and 18 kg of the carbon powder were subjected to a granulation treatment in the same manner as in Example 1, thereby giving granules (C/ZrO₂ mixture ratio: 21.4%).

The granules were melted in the electrical melting step under the same conditions as those of Example 1 and then cooled.

A significant amount of residual carbon was present in the obtained ingot-like product.

The yield was 46%. Table 1 shows the results of the evaluation of the obtained ingot-like product.

### Comparative Example 3

84 kg of the zirconium oxide powder and 14.6 kg of the carbon powder were subjected to a granulation treatment in the same manner as in Example 1, thereby giving granules (C/ZrO₂ mixture ratio: 17.4%).

The granules were subjected to the electrical melting step under the same conditions as those of Example 1 without being supplied with argon gas.

As a result, zirconium carbide was partly obtained immediately below the electrode. However, the ingot-like product had a size of about 25 mm (i.e., 50 mm or less), and a significant amount of unreacted zirconium oxide and carbon were present.

The yield was as low as 21%.

### Comparative Example 4

84 kg of the zirconium oxide powder and 14.6 kg of the carbon powder (C/ZrO₂ mixture ratio: 17.4%) were subjected to the electrical melting step without being granulated. The electromelting was conducted under the same conditions as those of Example 1.

As a result, much of the starting material powder dispersed; although zirconium carbide was partly obtained immediately below the electrode, the ingot-like product had a size of about 40 mm (i.e., 50 mm or less). Further, a significant amount of unreacted zirconium oxide and carbon were present.

The yield was as low as 34%.

### Industrial Applicability

The method according to the present invention enables the production of an ingot and a powder of zirconium carbide at a low cost, and can provide the ingot and powder in the market. The ingot and the powder of zirconium carbide according to the present invention have a high hardness, and show promise for applications in ultrahard materials and starting materials for the ultrahard materials. Moreover, because zirconium carbide has a melting point higher than WC (tungsten carbide), which is typically used as cemented carbide in abrasion-resistant products, and the like, zirconium carbide is expected to have a variety of applications under extreme conditions.

## Claims

1. A method for producing an ingot of zirconium carbide, the method being **characterized in that** the ingot produced has a size of 50 mm or more, a density of 5.7 g/cm³ or more, and a Vickers hardness of 1,500 or more, and that the method comprises the steps of:
(1) Step 1 of mixing zirconium oxide with carbon to obtain a mixture thereof, wherein the carbon is present in an amount of 15 to 20% by mass based on the zirconium oxide in the mixture;
(2) Step 2 of forming the mixture into granules;
(3) Step 3 of melting the granules using argon plasma; and
(4) Step 4 of slowly cooling the melt to obtain the ingot of zirconium carbide.

2. The method according to Claim 1, wherein the ingot of zirconium carbide has a size of 80 mm or more, a density of 6.0 g/cm³ or more, and a Vickers hardness of 2,000 or more.

3. A method for producing a zirconium carbide powder, the method comprising pulverizing the ingot of zirconium carbide obtained by the method according to Claim 1 or 2.

4. An ingot of zirconium carbide, the ingot having a size of 80 mm or more, a density of 6.0 g/cm³ or more, and a Vickers hardness of 2,000 or more.
